# EUROPEAN PATENT APPLICATION

(11) **EP 1 616 660 A1**
(43) Date of publication of application: **18.01.2006**
(21) Application number: 04726783.6
(22) Date of filing: 09.04.2004
(51) Int. Cl.: B23Q 3/06, F16B 2/18, F16B 2/12

(54) **CLAMPING DEVICE**

(30) Priority: 15.04.2003 JP 2003110049
(71) Applicant: Kabushiki Kaisha Imao Corporation, Seki-shi, Gifu 501-3954 (JP)
(72) Inventor: IWATA, Kazuhide, Kabushiki Kaisha Imao Corporation, Mino-shi Gifu 501-3706 (JP)
(74) Representative: Engelhard, Maximilian
(86) International application number: PCT/JP2004/005124
(87) International publication number: WO 2004/091851

(57) **Abstract**

To provide a clamp device capable of simply clamping an object to be clamped to and removing it from a fixing base. In the clamp device 3, a body 4, a pressing member 5 for pressing a workpiece 2, and a rotary member 6 are allowed to rotate relatively. The pressing member 5 is adapted to rotate between a first rotary position not facing the workpiece 2 and a second rotary position facing the workpiece 2. In the second rotary position, the pressing member 5 is also movable between a press releasing position and a pressing position. Here, when the rotary member 6 is rotated from one rotary position to a middle rotary position, the pressing member 5, while being held in the process releasing position by a holding means 120, is rotated by a contact means 110 from the first rotary position to the second rotary position as the rotary member 6 rotates. Next, when the rotary member 6 is rotated to the other rotary position, the pressing member 5, while being remained in the second rotary position by the rotary range restricting means 130, is moved to the pressing position by an interlock means 140.

## Description

### Field of the Invention

The present invention relates to a clamp device for clamping an object to be clamped, such as a workpiece, to a fixing base such as a fixture base, a machine table or the like.

### Background Art

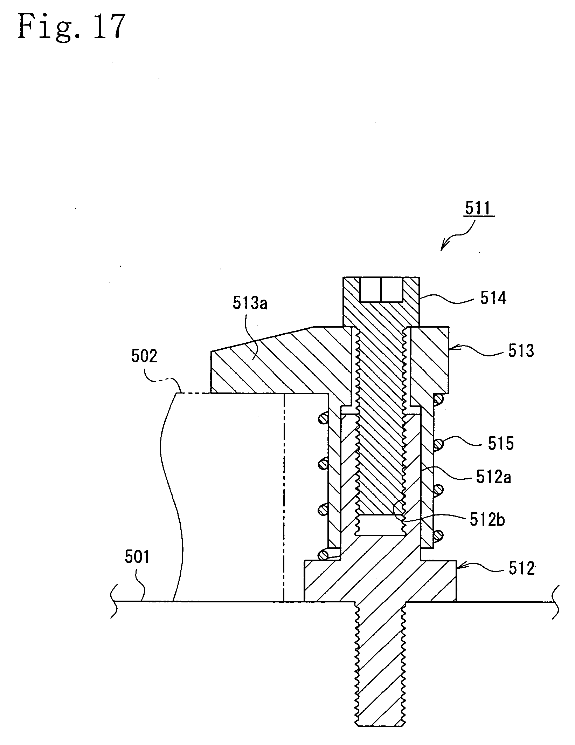

Conventionally, there has been a clamp device 511, as shown in FIG. 17, for clamping an object to be clamped, such as a workpiece, to a fixing base such as a fixture base, an MC pallet, a machine table or the like. The clamp device 511 includes: a body 512 that is attached to a fixing base 501; a pressing member 513 for pressing to clamp the workpiece 502; a tightening bolt 514; and a coil spring 515. The body 512 has a shank portion 512a that is formed with a thread hole 512b. Besides, the pressing member 513 is attached to the shank portion 512a so as to rotate and slide axially. The pressing member 513 is formed with a claw portion 513a projecting sideways to press the workpiece 502. The tightening bolt 514 passes through the pressing member 513 and engages the thread hole 512b formed in the body 512. As the tightening bolt 514 is tightened into the thread hole 512b, the pressing member 513 slides axially, causing the claw portion 513a to press the workpiece 502. Thus the workpiece 502 is fixed to the fixing base 501.

In the conventional clamp device 511 as described above, the workpiece 502 is clamped as follows: first, in the state in which the claw portion 513a of the pressing member 513 is rotated to a position not facing the workpiece 502, the workpiece 502 is placed on the fixing base 501; then the pressing member 513 is rotated so that the claw portion 513a faces the workpiece 502. After that, the tightening bolt 514 is tightened until the workpiece 502 is clamped to the fixing base 501. If the workpiece 502 is to be removed, first the tightening bolt 514 is loosened. After that, the pressing member 513 is rotated until the claw portion 513a of the pressing member 513 does not face the workpiece 502. Then the workpiece 502 can be removed from the fixing base 501. In this way, the conventional clamp device 511, if the workpiece 502 is clamped to or removed from the fixing base 501, requires two different kinds of work, that is, one work of rotating the pressing member 513 and the other work of tightening up or loosening the tightening bolt 514, which is very cumbersome.

The present invention has been made to overcome the conventional drawbacks described above. The object of the invention is to provide a clamp device that enables easier attachment and removal of an object to be clamped to and from a fixing base.

### Disclosure of the Invention

To achieve the above object a clamp device according to the present invention is constituted as follows.

That is to say, the clamp device according to the invention is a clamp device which clamps an object to be clamped to a fixing base and comprises: a body detachably secured to the fixing base, a pressing member for pressing to clamp the object, and a rotary member to be operated for rotation. Here, the body, the pressing member, and the rotary member are combined so as to rotate relative to each other about an axis. The pressing member is adapted to rotate between a first rotary position not facing the object in the same direction as the axial direction and a second rotary position facing the object in the same direction as the axial direction. The rotary member is adapted to rotate between one rotary position on the side of the first rotary position and another rotary position past a middle rotary position on the side of the second rotary position. The pressing member is adapted to move in the same direction as the axial direction between a press releasing position on a press releasing side and a pressing position on a pressing side so as to press the object and release the press in the second rotary position. Here, the clamp device has: a contact means, a holding means, a rotary range restricting means, and an interlock means. The contact means forces the pressing member and the rotary member to contact with each other so that the pressing member rotates between the first rotary position and the second rotary position as the rotary member rotates. The holding means is adapted to hold the pressing member in the press releasing position between the first rotary position and the second rotary position. The rotary range restricting means is adapted to prevent the pressing member from rotating from the second rotary position to a side opposite the first rotary position. The interlock means is adapted to move the pressing member in the second rotary position, between the press releasing position and the pressing position, as interlocked with the rotation of the rotary member between the middle rotary position and the other rotary position.

When the rotary member is rotated from the one rotary position to the middle rotary position, the pressing member, while being held in the press releasing position by the holding means, is rotated by the contact means from the first rotary position to the second rotary position as the rotary member rotates. When the rotary member is rotated from the middle rotary position to the other rotary position, the pressing member, while being remained in the second rotary position by the rotary range restricting means, is moved by the interlock means from the press releasing position to the pressing position and presses the object. When the rotary member is rotated from the other rotary position to the one rotary position side, the pressing member is moved by the interlock means from the pressing position to the press releasing position side, and is rotated by the contact means from the second rotary position to the first rotary position as the rotary member rotates.

In this way, if the object is to be clamped to the fixing base using the clamp device, the object is placed in the clamping position followed by rotating the rotary member from the one rotary position to the other rotary position past the middle rotary position. In such a way, the pressing member is rotated from the first rotary position not facing the object to the second rotary position facing the object, as the rotary member rotates up to the middle rotary position. By rotating the rotary member to the other rotary position, the pressing member, while being remained in the second rotary position, moves from the press releasing position on the press releasing side to the pressing position on the pressing side, to press the object. In this way, the object is clamped to the fixing base. In contrast, if the object is to be removed from the fixing base, the rotary member is rotated from the other rotary position to the one rotary position. This causes the pressing member to move from the pressing position to the press releasing position side, and rotates from the second rotary position facing the object to the first rotary position not facing the object, resulting in the removal of the object from the fixing base. In other words, by use of this clamp device, when the object to be clamped is placed on and clamped to the fixing base or the object is removed from the fixing base, the pressing member is rotated between the first rotary position not facing the object and the second rotary position facing the object by rotating the rotary member. Then the pressing member is moved between the press releasing position on the press releasing side and the pressing position on the pressing side. It is therefore easy to clamp the object to the fixing base and remove it therefrom.

In the clamp device according to the invention, the body of the clamp device is provided with an axial bore extending along the axis, the rotary member has a shank portion that is rotatably inserted in the axial bore, and the rotary member is adapted to rotate relative to the body about the axis. The pressing member has a through-hole for the shank portion to pass and is allowed to rotate about the axis relative to the rotary member. In other words, in the clamp device, the shank portion of the rotary member passes through the axial bore formed in the body and also through the through-hole formed in the pressing member, so that the body, the pressing member, and the rotary member are allowed to rotate relative to each other about the axis.

Also, the rotary range restricting means includes: a projection disposed in either one of the body and the pressing member; and a recess such as a hole or a cut out formed in the other of the body and the pressing member, to receive the projection and allow the projection to move. Here, when the pressing member rotates from the first rotary position to the second rotary position, the projection relatively moves within the recess and comes into contact with the inside surface thereof, resulting in prevention of further movement of the projection.

The holding means includes a resilient body for urging the pressing member toward the press releasing position from the pressing position. In this way, the pressing member is urged by the resilient body toward the press releasing position on the press releasing side from the pressing position on the pressing side and held in the press releasing position between the first rotary position and the second rotary position.

The interlock means comprises: a guide means for guiding the rotary member to move in the same direction as the axial direction by the rotation of the rotary member, and a support means for supporting the pressing member so that it moves between the press releasing position and the pressing position as the rotary member moves in the same direction as the axial direction. Owing to the rotation of the rotary member between the middle rotary position and the other rotary position, the rotary member is guided to move in the same direction as the axial direction. Along with this movement, the pressing member supported by the support means moves between the press releasing position on the press releasing side and the pressing position on the pressing side.

The guide means includes: a guided projection disposed in either one of the body and the rotary member; and a guide surface provided in the other of the body and the rotary member, for relatively guiding the guided projection. In this way, as the guided projection is relatively guided with the guide surface, the rotary member is guided to move in the same direction as the axial direction.

The support means includes: a resilient element for urging the pressing member toward the press releasing position from the pressing position, and a receiving portion disposed in the rotary member for receiving the pressing member against the urging force of the resilient element. Therefore, the rotary member, when it rotates between the middle rotary position and the other rotary position and is guided by the guide means to move in the same direction as the axial direction, the pressing member urged by the resilient element and received on the receiving portion of the rotary member moves between the press releasing position and the pressing position along with the movement in the same direction as the axial direction.

The contact means includes a resilient member for urging a first sliding surface and a second sliding surface of the pressing member and the rotary member facing each other to come into tight contact with each other. In this way, as the first sliding surface and the second sliding surface of the pressing member and the rotary member facing each other are urged by the resilient member to come into tight contact with each other, the pressing member securely rotates between the first rotary position and the second rotary position as the rotary member rotates.

The contact means comprises: in addition to the resilient member, an engagement recess provided on one of the pressing member and the rotary member; and an engagement member that is provided in the other of the pressing member and the rotary member and has an engagement portion resiliently urged to releasably engage the engagement recess. Engagement of the resiliently urged engagement portion with the engagement recess as described above makes it possible to stop relative rotation of the pressing member and the rotary member, so that the pressing member rotates more securely between the first rotary position and the second rotary position as the rotary member rotates.

The pressing member is guided, while being located in the press releasing position, to move from a side distant from the pressing position to a side near the pressing position as the pressing member rotates from the first rotary position to the second rotary position.

In this way, with the press releasing position having a range, when the pressing member rotates from the first rotary position to the second rotary position, the pressing member moves from the side distant from the pressing position to the side near the pressing position. Therefore, even if any obstacle is present on the way the pressing member moves from the first rotary position to the second rotary position, the pressing member can pass the obstacle. Moreover, because the pressing member approaches the pressing position while it rotates from the first rotary position to the second rotary position, it is possible to reduce the stroke defined between the press releasing position and the pressing position in the second rotary position. Therefore, it is possible to increase the force of the pressing member for pressing the object.

### Brief Description of Drawings

FIG. 1 is an exploded, perspective view of a clamp device of an embodiment according to the invention;
FIG. 2 is a plan view, in which a rotary member is in one rotary position, and a pressing member is in a first rotary position and in a press releasing position;
FIG. 3 is a cross sectional view, taken along a line A-A, in FIG 2;
FIG. 4 is a plan view, in which the rotary member is in a middle rotary position, and the pressing member is in a second rotary position and in the press releasing position;
FIG. 5 is a cross sectional view, taken along a line B-B, in FIG. 4;
FIG. 6 is a plan view, in which the rotary member is in another rotary position, and the pressing member is in the second rotary position and in a pressing position;
FIG. 7 is a cross sectional view, taken along a line C-C, in FIG. 6;
FIG. 8 is a plan view, in which the rotary member is in the other rotary position and in the maximum rotary position, and the pressing member is in the second rotary position and in the maximum pressing position;
FIG. 9 is a cross sectional view, taken along a line D-D, in FIG. 8;
FIG. 10 is a perspective view, showing a state in use with a workpiece yet to be attached or removed;
FIG. 11 is a perspective view, showing a state in use with a workpiece attached;
FIG. 12 is a cross sectional view, showing a first modification of the embodiment of the clamp device according to the invention;
FIG. 13 is a perspective view, showing a second modification of the embodiment of the clamp device according to the invention;
FIG. 14 is a plan view, showing a third modification of the embodiment of the clamp device according to the invention;
FIG. 15 is a cross sectional view, taken along a line E-E, in FIG. 14;
FIG. 16 is a cross sectional view, showing a fourth modification of the embodiment of the clamp device according to the invention; and
FIG. 17 is a cross sectional view, showing a conventional clamp device.

### Best Mode of Embodying the Invention

Clamp devices embodied according to the invention are described below, with reference to the accompanying drawings.

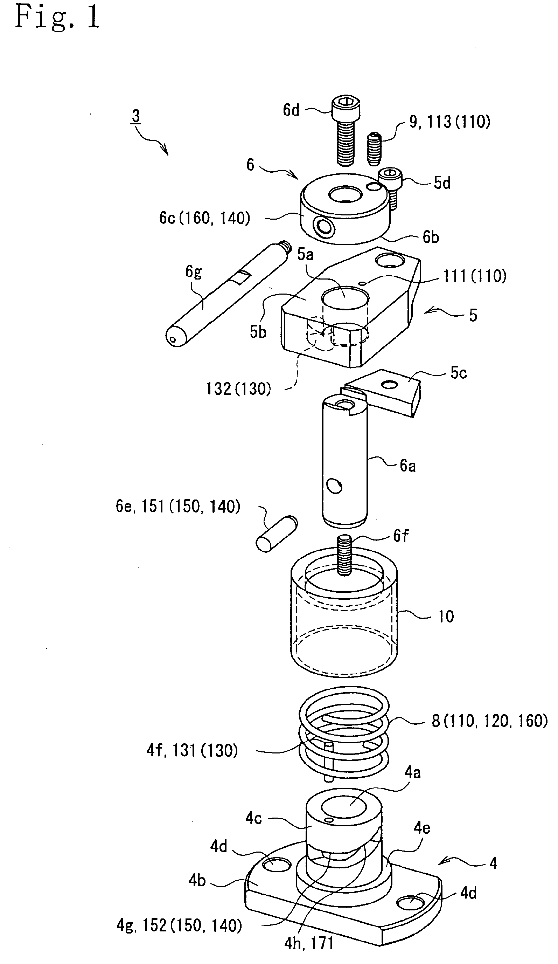

FIGs. 1 to 11 show a clamp device as an embodiment of the invention. In the drawings, reference numeral 1 denotes a fixing base, such as a fixture base, that is attached to a machine table or a pallet of a machine tool such as a machining center. Reference numeral 2 represents for example a workpiece, an object to be clamped, as an object to be processed. Reference numeral 3 represents a clamp device for clamping the workpiece 2 to the fixing base 1.

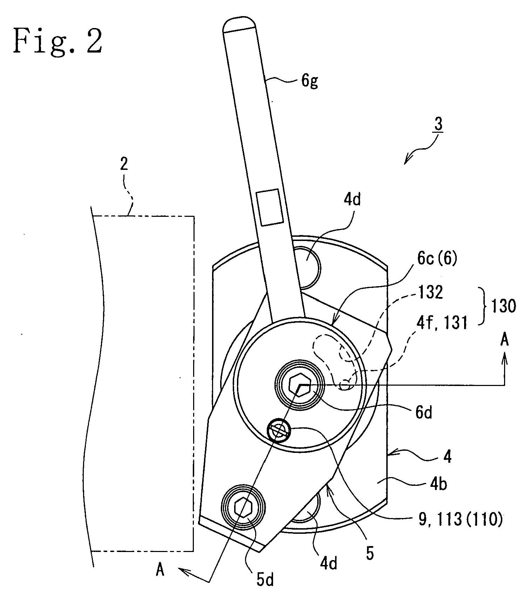

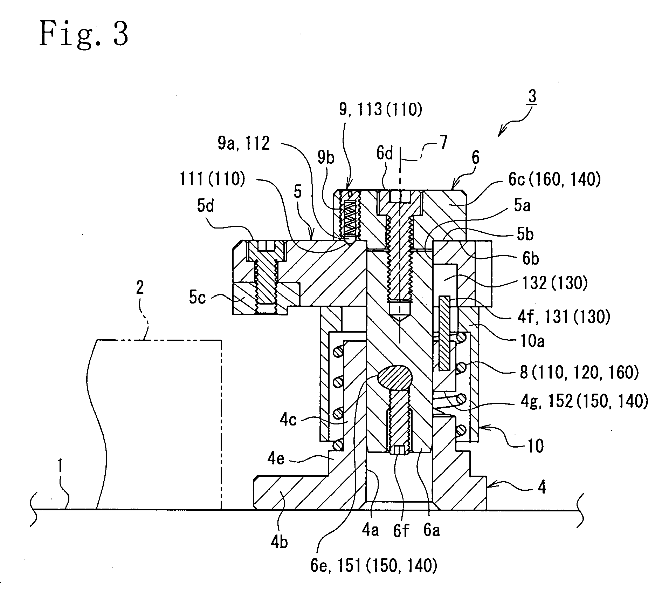

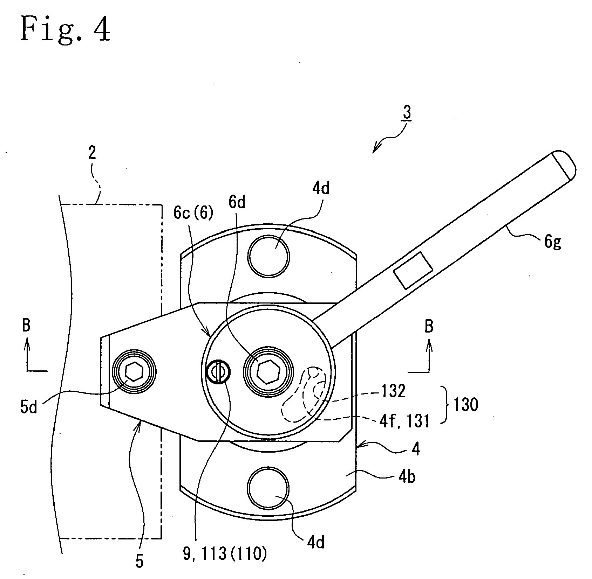

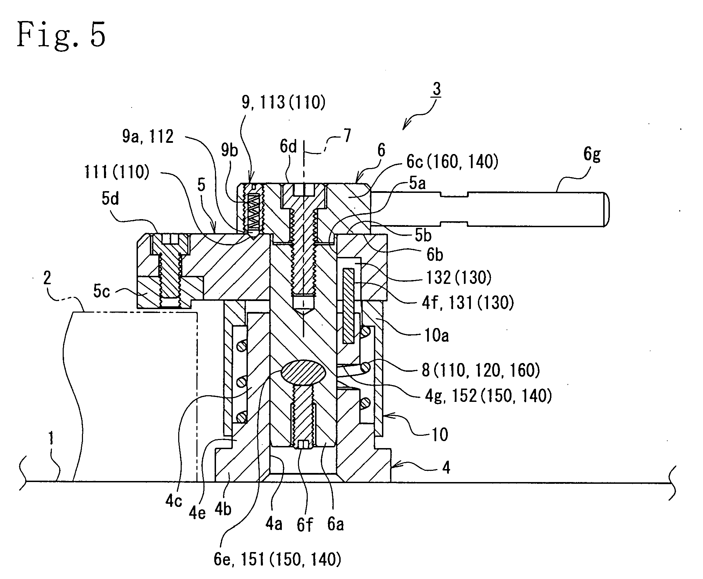

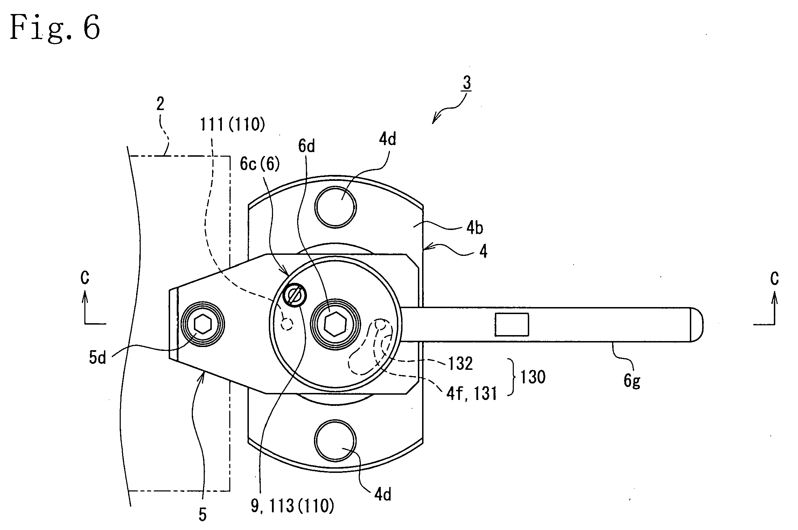

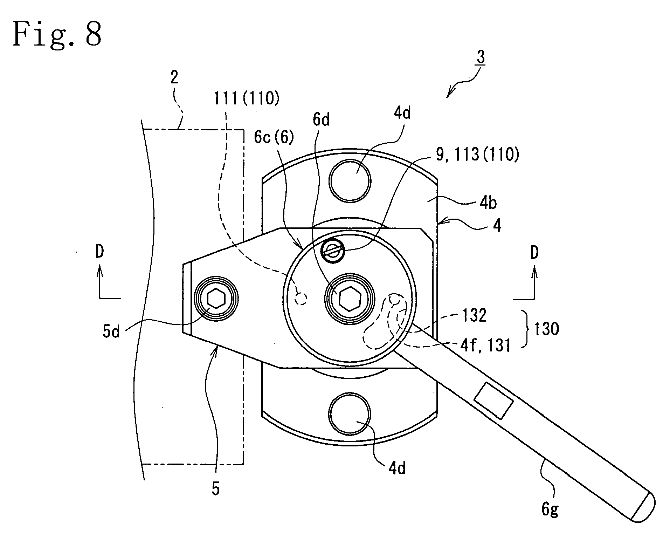

The clamp device 3 includes: a body 4 removably attached to the fixing base 1; a pressing member 5 for pressing to clamp the workpiece 2; and a rotary member 6 operated for rotation. The body 4, the pressing member 5, and the rotary member 6 are combined so as to relatively rotate about an axis 7. Thus, the pressing member 5 is allowed to rotate between a first rotary position (See FIGs. 2 and 3) not facing the workpiece 2 in the same direction as of the axis 7 and a second rotary position (See FIGs. 4 and 5) facing the workpiece 2 in the same direction as of the axis 7. The rotary member 6 is allowed to rotate between one rotary position (See FIG. 2) on the first rotary position side and another rotary position (See FIGs. 6 and 8) past a middle rotary position (See FIG. 4) on the second rotary position side. In the illustrated embodiment, the body 4 has an axial bore 4a therethrough in the direction of the axis 7. On the other hand, the rotary member 6 has a shank portion 6a that is rotatably inserted in the axial bore 4a of the body 4, so that the rotary member 6 may rotate about the axis 7 relative to the body 4. The pressing member 5 has a through-hole 5a to permit the shank portion 6a of the rotary member 6 to pass, so that the pressing member 5 may rotate about the axis 7 relative to the rotary member 6. Thus, as for this clamp device 3, the body 4, the pressing member 5, and the rotary member 6 are allowed to rotate relatively about the axis 7 since the shank portion 6a of the rotary member 6 is inserted in the axial bore 4a of the body 4 and the through-hole 5a of the pressing member 5.

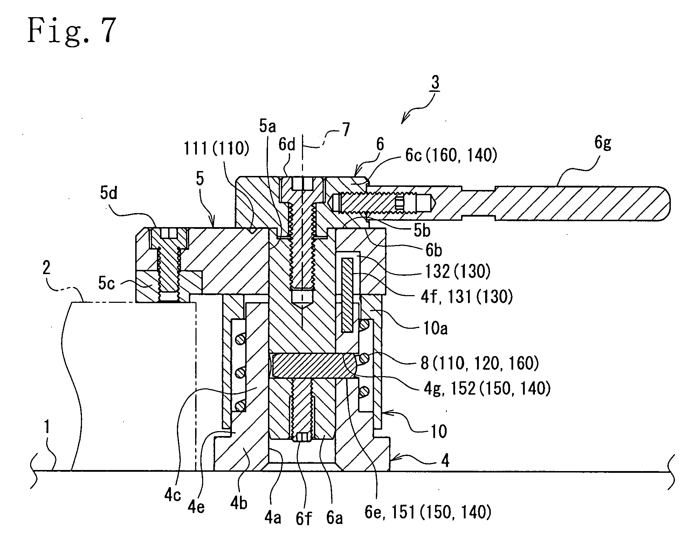

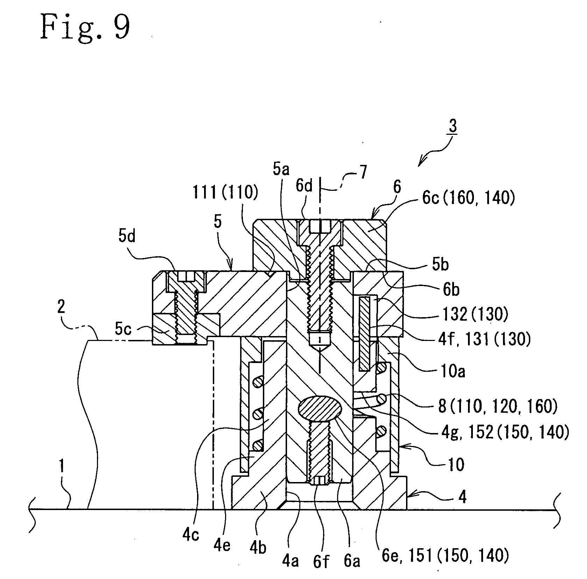

The pressing member 5 is adapted to move between a press releasing position (See FIG. 5) on a press releasing side and a pressing position (See FIGs. 7 and 9) on a pressing side in the same direction as of the axis 7 so that it presses the workpiece 2 and releases the press in the second rotary position.

Here, the clamp device 3 includes a contact means 110, a holding means 120, a rotary range restricting means 130, and an interlock means 140.

The contact means 110 serves to cause the pressing member 5 and the rotary member 6 to contact with each other so that the pressing member 5 rotates between the first rotary position (See FIGs. 2 and 3) and the second rotary position (See FIGs. 4 and 5) as the rotary member 6 rotates. Specifically, the contact means 110 includes a coil spring 8 as a resilient member for urging a first sliding surface 5b and a second sliding surface 6b of the pressing member 5 and the rotary member 6 facing each other to contact closely each other. More specifically, the contact means 110 has: in addition to the coil spring 8 serving as a resilient member, an engagement recess 111 disposed in one of the pressing member 5 and the rotary member 6; and an engagement member 113 which is disposed in the other of the pressing member 5 and the rotary member 6 and has an engagement portion 112 resiliently urged to releasably engage the engagement recess 111. In the illustrated embodiment, the engagement recess 111 is formed in the pressing member 5, while the engagement member 113 is formed in the rotary member 6. The engagement member 113 is a plunger 9 that is attached to, as embedded in, the rotary member 6. The engagement portion 112 is a pressing piece 9a such as a ball, which is placed at the tip of the plunger 9. The pressing piece 9a is resiliently urged by a spring 9b disposed in the plunger 9.

The holding means 120 serves to hold the pressing member 5 in the press releasing position between the first rotary position (See FIGs. 2 and 3) and the second rotary position (See FIGs. 4 and 5). Specifically, the holding means 120 includes the coil spring 8 as a resilient body for urging the pressing member 5 toward the press releasing position from the pressing position. Thus, the pressing member 5 is urged by the coil spring 8 as a resilient body toward the press releasing position on the press releasing side from the pressing position on the pressing side and held in the press releasing position between the first rotary position and the second rotary position. More specifically, the coil spring 8 is interposed between the body 4 and the pressing member 5 so as to urge the pressing member 5. The coil spring 8 urges the pressing member 5 not directly but indirectly through an outer cylinder 10 which will be described later. As described above, while the pressing member 5 is urged by the coil spring 8 as a resilient body, the urging force, in the illustrated embodiment, is received by a receiving portion 6c of the rotary member 6, to be described later, and the pressing member 5 is held in the press releasing position.

The rotary range restricting means 130 serves to prevent the pressing member 5 from rotating from the second rotary position to the side opposite the first rotary position. Specifically, the rotary range restricting means 130 includes a projection 131 disposed in either one of the body 4 and the pressing member 5, and a recess 132 such as a hole or a cut out, which is provided in the other of the body 4 and the pressing member 5 and receives the projection 131 for movement therein. As the pressing member 5 rotates from the first rotary position (See FIG. 2) to the second rotary position (See FIG. 4), the projection 131 relatively moves within the recess 132 and comes into contact with the inside surface of the recess 132, resulting in prevention of further travel of the projection 131. In the illustrated embodiment, the projection 131 is disposed in the body 4, and the recess 132 is disposed in the pressing member 5. Actually, when the recess 132 moves, and the inside surface of the recess 132 comes into contact with the projection 131, the movement of the recess 132, in other words, the rotation of the pressing member 5, is prevented.

The interlock means 140 serves to cause the pressing member 5 in the second rotary position to move between the press releasing position and the pressing position as interlocked with the rotation of the rotary member 6 between the middle rotary position (See FIGs. 4 and 5) and the other rotary position (See FIGs. 6 to 9). Specifically, the interlock means 140 includes: a guide means 150 for guiding the rotary member 6 by rotating the rotary member 6, to move in the same direction as the direction of the axis 7, and a support means 160 for supporting the pressing member 5 so that it moves between the press releasing position and the pressing position along with the movement of the rotary member 6 in the same direction as the direction of the axis 7. Thus, the rotary member 6, as it rotates between the middle rotary position and the other rotary position, is guided to move in the same direction as the direction of the axis 7. Along with this movement, the pressing member 5 supported by the support means 160 moves between the press releasing position on the press releasing side and the pressing position on the pressing side. Here, the guide means 150 includes: a guided projection 151 provided in one of the body 4 and the rotary member 6, and a first guide surface 152 serving as a guide surface provided in the other of the body 4 and the rotary member 6, for relatively guiding the guided projection 151. In other words, as the guided projection 151 is relatively guided by the first guide surface 152, the rotary member 6 is guided to move in the same direction as the direction of the axis 7. The support means 160 includes: the coil spring 8 serving as a resilient element for urging the pressing member 5 toward the press releasing position from the pressing position; and a receiving portion 6c that is provided on the rotary member 6 to receive the pressing member 5 against the urging force of the coil spring 8 as a resilient element. Thus, as the rotary member 6 rotates between the middle rotary position and the other rotary position and is guided by the guide means 150 to move in the same direction as the direction of the axis 7, the pressing member 5 urged by the coil spring 8 serving as a resilient element and received by the receiving portion 6c of the rotary member 6 moves between the press releasing position and the pressing position along with the movement in the same direction as the direction of the axis 7. In the illustrated embodiment, the guided projection 151 is disposed in the rotary member 6, and the first guide surface 152 is disposed in the body 4.

Specifically, the body 4 includes: a plate-like base portion 4b, and a cylindrical portion 4c projected upward from the central portion of the base portion 4b. Here, the base portion 4b has attachment holes 4d and 4d for attachment bolts 11 and 11 to pass through for securing the body 4 to the fixing base 1. The cylindrical portion 4c has a base portion in which a step 4e of a greater diameter is formed. The inside of the cylindrical portion 4c constitutes the axial bore 4a and passes through the cylindrical portion 4c and the base portion 4b. To the fore-end of the cylindrical portion 4c is mounted a pin 4f with its base end side embedded. The projecting tip of the pin 4f serves as the projection 131, which constitutes the rotary range restricting means 130.

The cylindrical portion 4c is formed with a first elongate slot 4g and a second elongate slot 4h continuously connected with each other (See FIG. 1). The inside peripheral surface of the first elongate slot 4g serves as the first guide surface 152 for relatively guiding the guided projection 151 of the rotary member 6 when the rotary member 6 rotates between the middle rotary position and the other rotary position. The inside peripheral surface of the second elongate slot 4h serves as the second guide surface 171 for relatively guiding the guided projection 151 when the rotary member 6 rotates between the one rotary position and the middle rotary position. By the guided projection 151, the second guide surface 171, the holding means 120 and the contact means 110, the pressing member 5 positioned in the press releasing position and from the side distant from the pressing position is guided to move to the side near the pressing position along with its rotation from the first rotary position (See FIGs. 2 and 3) to the second rotary position (See FIGs. 4 and 5). The coil spring 8 is fitted over the cylindrical portion 4c of the body 4. Besides, an outer cylinder 10 is fitted over the coil spring 8. One end face of the coil spring 8 is in contact with the step 4e of the body 4 while the other end face is in contact with a raised step 10a formed on the inside surface of the outer cylinder 10.

The rotary member 6 includes the shank portion 6a inserted in the axial bore 4a of the body 4 so as to be rotatable about and slidable along the axis 7, and the receiving portion 6c located on the fore-end side of the shank portion 6a. The shank portion 6a and the receiving portion 6c are joined as a single member with a bolt 6d as a securing member. A guide pin 6e is inserted in the shank portion 6a and secured with a set screw 6f. The projecting fore-end of the guide pin 6e is the guided projection 151 constituting the guide means 150. The receiving portion 6c has a disk like shape with its circumferential surface provided with a detachable operation handle 6g for manual rotation. A surface (the underside in the illustrated embodiment) of the receiving portion 6c facing the pressing member 5 is the second sliding surface 6b. The receiving portion 6c is provided with the plunger 9 as embedded therein, with the pressing piece 9a resiliently urged to project outside and recede inside the second sliding surface 6b.

The pressing member 5 has the shape of a horizontally elongated plate and the through-hole 5a is formed at one side thereof to pass through. Since the shank portion 6a of the rotary member 6 is inserted in the through-hole 5a, the pressing member 5 is allowed to rotate about and slide along the axis 7. A surface (the upside in the illustrated embodiment) of the pressing member 5 that faces the receiving portion 6c of the rotary member 6 is the first sliding surface 5b. To the other side of the pressing member 5 is attached using a bolt 5d, a fitting 5c for pressing the workpiece 2. The recess 132, constituting the rotary range restricting means 130, is formed along the circumference of the through-hole 5a in the pressing member 5. The recess 132, in the illustrated embodiment, opens to the through-hole 5a side and the bottom side.

While respective FIGs. 6 to 7, and FIGs. 8 to 9 show a state in which the rotary member 6 is in the other rotary position and the pressing member 5 is in the second rotary position and pressing position, FIGs. 6 and 7 show a target position, calculated from design, where the workpiece 2 is to be pressed. FIGs. 8 and 9 show the rotary member 6 and the pressing member 5 having advanced furthermore from the target position, with the rotary member 6 in the maximum rotary position and the pressing member 5 in the maximum pressing position.

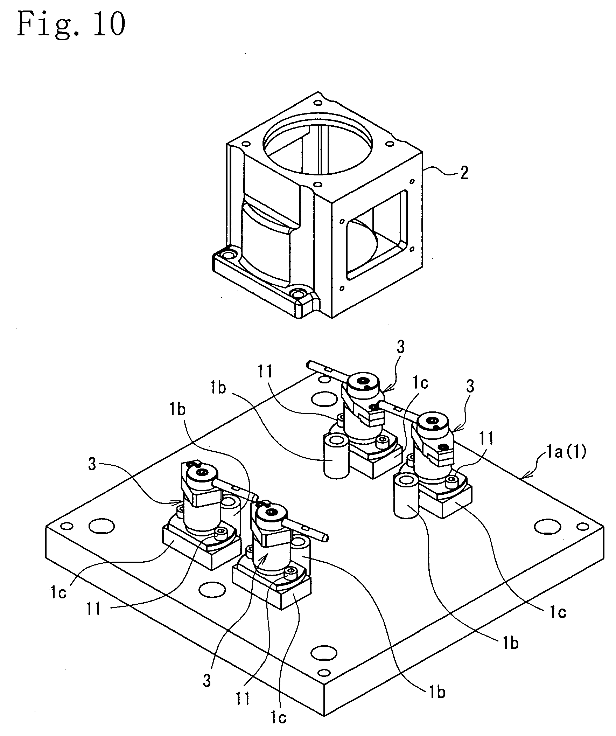

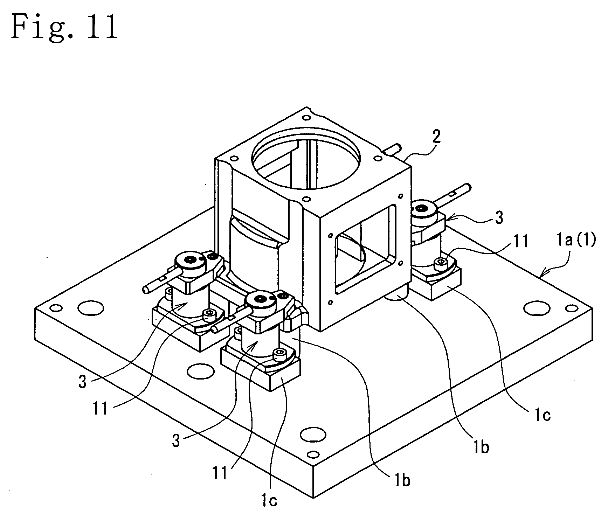

FIGs. 10 and 11 show an example of clamping the workpiece 2 to a fixture base 1a constituting the fixing base 1, using four sets of the clamp device 3. FIG. 10 is a perspective view, showing a state in which the workpiece 2 is not yet placed or has been removed. FIG. 11 is a perspective view, showing a state in which the workpiece 2 is clamped. In the drawings, reference numeral 1b denotes supporters which are mounted on the fixture base 1a to support the workpiece 2. Reference numeral 1c denotes spacers which are likewise mounted on the fixture base 1a for the clamp devices 3 to be secured to, respectively. Thus, the fixing base 1 of the embodiment shown in FIGs. 10 and 11 includes the supporters 1b and 1b, and spacers 1c and 1c, in addition to the fixture base 1a.

Functional effects of the clamp device 3 constituted as above are described below. With the clamp device 3, when the rotary member 6 is rotated from the one rotary position (See FIGs. 2 and 3) to the middle rotary position (See FIGs. 4 and 5), the pressing member 5, while being held in the press releasing position by the holding means 120, is rotated by the contact means 110 from the first rotary position to the second rotary position, as the rotary member 6 rotates. When the rotary member 6 is rotated further from the middle rotary position (See FIGs. 4 and 5) to the other rotary position (See FIGs. 6 to 9), the pressing member 5, while being remained in the second rotary position by the rotary range restricting means 130, is moved by the interlock means 140 from the press releasing position to the pressing position and presses the workpiece 2.

In other words, in order to clamp the workpiece 2 to the fixing base 1, first the workpiece 2 is placed in the clamping position and the rotary member 6 is then rotated from one rotary position past the middle rotary position to the other rotary position. This causes the pressing member 5 to rotate from the first rotary position (See FIGs. 2 and 3) not facing the workpiece 2 to the second rotary position (See FIGs. 4 and 5) facing the workpiece 2 as the rotary member 6 rotates up to the middle rotary position. By the rotation of the rotary member 6 up to the other rotary position, the pressing member 5, while being remained in the second rotary position, moves from the press releasing position (See FIG. 5) on the press releasing side to the pressing position (See FIGs. 7 and 9) on the pressing side to press the workpiece 2. Thus, the workpiece 2 is clamped to the fixing base 1.

In contrast, if the rotary member 6 is rotated from the other rotary position to the one rotary position side, then the pressing member 5 is moved by the interlock means 140 from the pressing position to the press releasing position side, and as the rotary member 6 rotates, the pressing member 5 is rotated by the contact means 110 from the second rotary position to the first rotary position. In other words, if the workpiece 2 is to be removed from the fixing base 1, the rotary member 6 is rotated from the other rotary position to the one rotary position. This causes the pressing member 5 to move from the pressing position to the press releasing position side, and to rotate from the second rotary position facing the workpiece 2 to the first rotary position not facing the workpiece 2. Here, the workpiece 2 is removed from the fixing base 1.

With the clamp device 3 as described above, if the workpiece 2 is to be placed on and clamped to the fixing base 1 or if the workpiece 2 is to be removed from the fixing base 1, because rotating the rotary member 6 causes the pressing member 5 to rotate between the first rotary position not facing the workpiece 2 and the second rotary position facing the workpiece 2, and to move between the press releasing position on the press releasing side and the pressing position on the pressing side, the workpiece 2 is easily clamped to or removed from the fixing base 1.

As for the contact means 110, because the first sliding surface 5b and the second sliding surface 6b of the pressing member 5 and the rotary member 6 facing each other are urged by the coil spring 8 as a resilient member to tightly contact each other, the pressing member 5 securely rotates between the first rotary position and the second rotary position as the rotary member 6 rotates. Besides, owing to the engagement of the resiliently urged pressing piece 9a (engagement portion 112) of the rotary member 6 with the engagement recess 111 of the pressing member 5, the pressing member 5 and the rotary member 6 are prevented from rotating relatively. Therefore, the pressing member 5 rotates more certainly between the first rotary position and the second rotary position as the rotary member 6 rotates. In other words, while the rotary member 6 is being rotated from one rotary position to the middle rotary position, the pressing piece 9a is in engagement with the engagement recess 111, so that the rotary member 6 and the pressing member 5 rotate together. Rotating the rotary member 6 from the middle rotary position to the other rotary position causes slippage between the first sliding surface 5b and the second sliding surface 6c, and also disengagement between the engagement recess 111 and the pressing piece 9a. In contrast, if the rotary member 6 is rotated from the other rotary position to the one rotary position, the pressing piece 9a engages the engagement recess 111 in the middle of the rotation.

With the press releasing position of the pressing member 5 having a range, that is, a height difference, due to relationship between the second guide surface 171 (the second elongate slot 4h) and the guided projection 151 (the guide pin 6e), when the pressing member 5 rotates from the first rotary position to the second rotary position, the pressing member 5 is adapted to move from the side distant from the pressing position to the side near the pressing position. It is therefore possible to rotate the pressing member 5 apart from the workpiece 2 in the same direction as the direction of the axis 7, that is, the up-and-down direction so that the pressing member 5 can pass an obstacle, if any, on the way the pressing member 5 moves from the first rotary position to the second rotary position. Besides, because the pressing member 5 approaches the pressing position while it rotates from the first rotary position to the second rotary position, it is possible to reduce the stroke between the press releasing position and the pressing position in the second rotary position. Therefore, it is possible to increase the pressing force with which the pressing member 5 presses the workpiece 2. In particular in the embodiment shown in FIG. 1, because the first guide surface 152 (the first elongate slot 4g) is gentler than the second guide surface 171 (the second elongate slot 4h), it is possible to further increase the force for pressing the workpiece 2.

Incidentally, the invention is not limited to the above embodiment but may be modified in various ways. For example, the fixing base 1 may be any table such as an MC pallet, machine table, etc., other than the fixture base 1a. The object to be clamped may be for example a jig, a fixture, die or the like, other than the workpiece 2.

The contact means 110 in the clamp device 3 includes: the coil spring 8 serving as a resilient member, the engagement recess 111, and the plunger 9 serving as the engagement member 113. However, the engagement recess 111 and the plunger 9 may not be used.

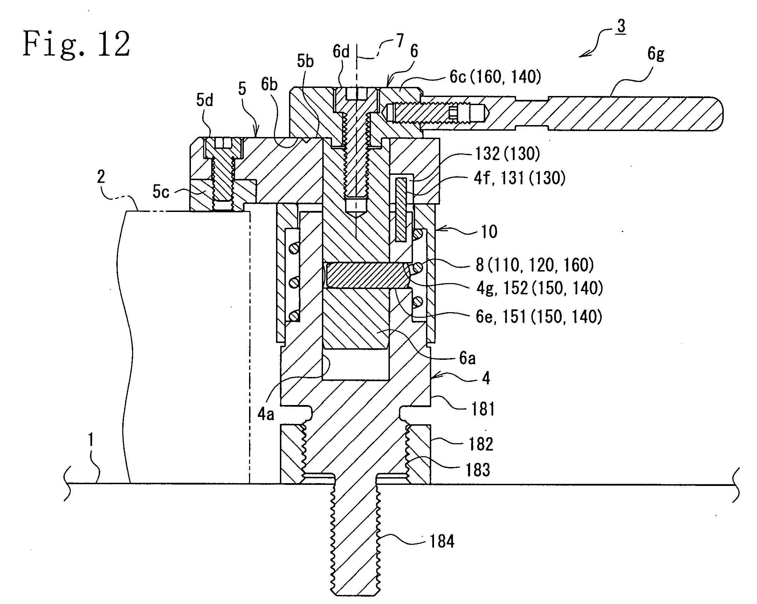

The body 4 has the plate-like base portion 4b for attachment to the fixing base 1. Alternatively, as shown in FIG. 12, the body 4 may include: a tool engagement portion 181 to be engaged with a tool such as a wrench; a first thread portion 183 to be engaged with a nut 182; and a second thread portion 184 to be screwed in the fixing base 1, in vertical order.

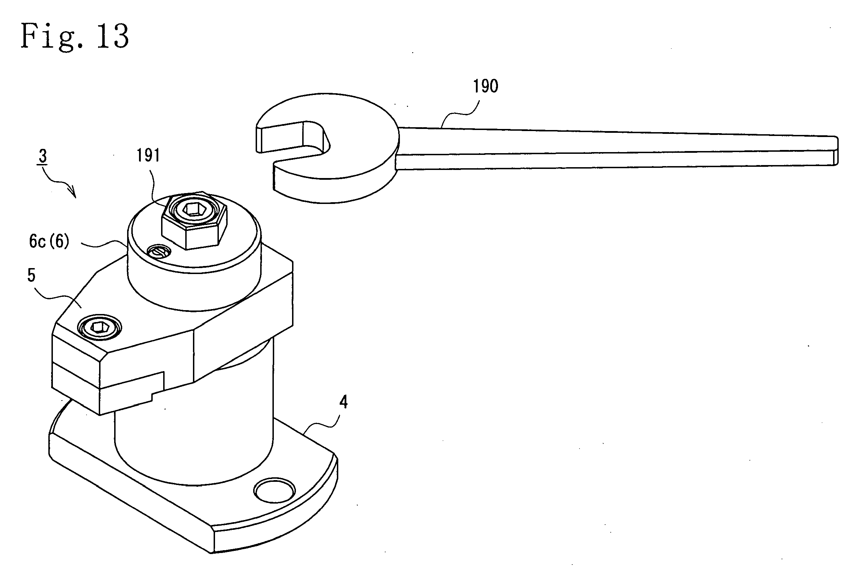

The rotary member 6 may not have the operation handle 6g for rotary operation. Alternatively, a tool engagement portion 191 for engaging a tool 190 such as a wrench may be provided, as shown in FIG. 13.

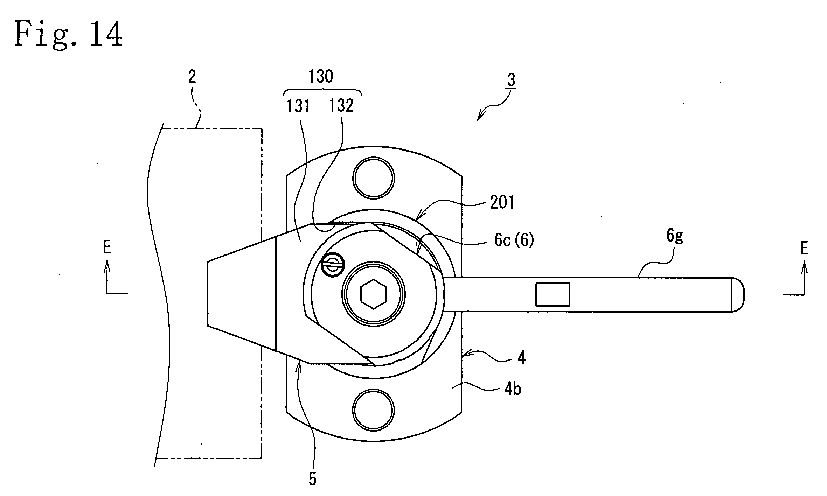

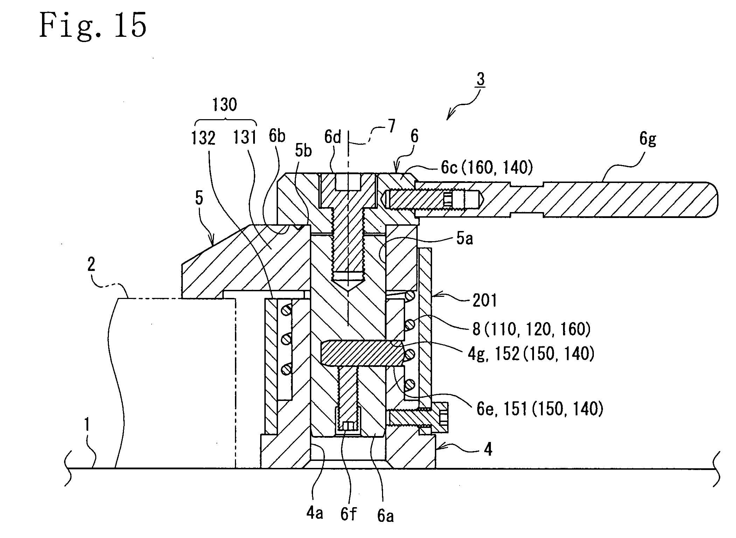

The rotary range restricting means 130 may not include the projection 131 disposed in the body 4 and the recess 132 disposed in the pressing member 5, but, as shown in FIGs. 14 and 15, may include: a recess 132 as a cut out formed at the top end of an outer cylinder 201 that is fixed to the body 4, and a projection 131 extending sideways from the through-hole 5a side of the pressing member 5. In other words, the rotary range restricting means 130 may include the recess 132 on the body 4 side and the projection 131 on the pressing member 5 side.

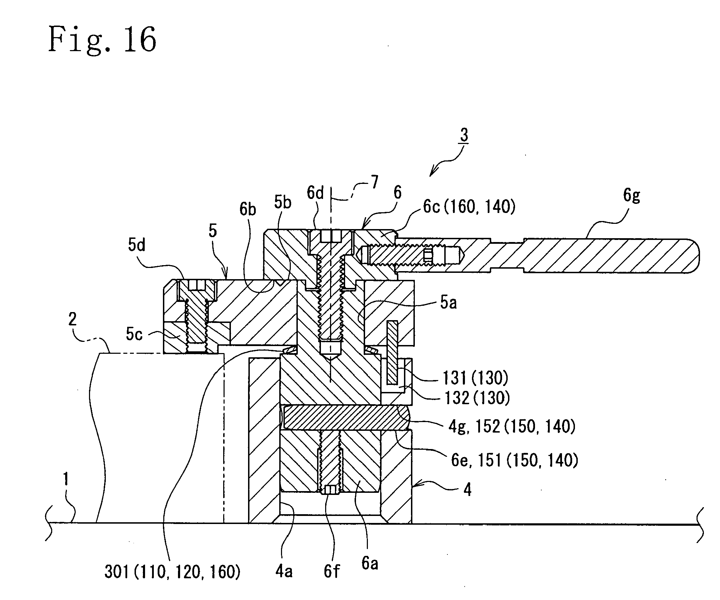

The clamp device 3 includes the coil spring 8 disposed to urge between the body 4 and the pressing member 5. Alternatively, the coil spring 8 may be replaced, as shown in FIG. 16, with a resilient piece 301, which is disposed to urge between the rotary member 6 and the pressing member 5 and serves as a resilient member which constitutes at least the contact means 110, such as a coned disk spring and a spring washer. In the illustrated embodiment, the resilient piece 301 serves as a resilient body as an element constituting the holding means 120, and also serves as a resilient element as an element constituting the support means 160. Incidentally, in FIG. 16, the projection 131 of the rotary range restricting means 130 is disposed in the pressing member 5, and the recess 132 is disposed in the body 4.

As for the guide means 150, the guided projection 151 is disposed in the rotary member 6, and the guide surfaces 152, 171 are in the body 4. Alternatively, they may be disposed contrarily, with the guided projection 151 disposed in the body 4, and with the guide surfaces 152, 171 in the rotary member 6.

In the contact means 110, while the engagement recess 111 is disposed in the pressing member 5 and the plunger 9 serving as the engagement member 113 is disposed in the rotary member 6, they may be disposed contrarily, with the engagement recess 111 disposed in the rotary member 6 and with the plunger 9 in the pressing member 5.

### Industrial Applicability

As described above, the clamp device according to the invention may be used to clamp workpieces, jigs, fixtures, or dies to a fixture base, MC pallet, machine table, for example.

## Claims

1. A clamp device for clamping an object to be clamped to a fixing base, comprising:
a body detachably secured to the fixing base;
a pressing member for pressing to clamp the object;
a rotary member to be operated for rotation;
the body, the pressing member, and the rotary member being combined so as to rotate relative to each other about an axis; the pressing member being adapted to rotate between a first rotary position not facing the object in the same direction as the axial direction and a second rotary position facing the object in the same direction as the axial direction; and the rotary member being adapted to rotate between one rotary position on the side of the first rotary position and another rotary position past a middle rotary position on the side of the second rotary position;
the pressing member being adapted to move in the same direction as the axial direction between a press releasing position on a press releasing side and a pressing position on a pressing side so as to press the object and release the press in the second rotary position;
a contact means for causing the pressing member and the rotary member to contact with each other so that the pressing member rotates between the first rotary position and the second rotary position as the rotary member rotates;
a holding means for holding the pressing member in the press releasing position between the first rotary position and the second rotary position;
a rotary range restricting means for preventing the pressing member from rotating from the second rotary position to a side opposite the first rotary position; and
an interlock means for moving the pressing member positioned in the second rotary position, between the press releasing position and the pressing position, as interlocked with the rotation of the rotary member between the middle rotary position and the other rotary position;
wherein, when the rotary member is rotated from the one rotary position to the middle rotary position, the pressing member, while being held in the press releasing position by the holding means, is rotated by the contact means from the first rotary position to the second rotary position as the rotary member rotates, and when the rotary member is rotated from the middle rotary position to the other rotary position, the pressing member, while being remained in the second rotary position by the rotary range restricting means, is moved from the press releasing position to the pressing position by the interlock means to press the object, and
wherein, when the rotary member is rotated from the other rotary position to the one rotary position side, the pressing member is moved by the interlock means from the pressing position to the press releasing position side, and the pressing member is rotated by the contact means from the second rotary position to the first rotary position as the rotary member rotates.

2. The clamp device according to Claim 1, wherein
the body has an axial bore in the axial direction thereof;
the rotary member has a shank portion that is rotatably inserted in the axial bore so that the rotary member may rotate about the axis relative to the body; and
the pressing member has a through-hole for the shank portion to pass and is allowed to rotate about the axis relative to the rotary member.

3. The clamp device according to Claim 1, wherein
the rotary range restricting means comprises: a projection disposed in either one of the body and the pressing member; and a recess such as a hole or a cut out formed in the other of the body and the pressing member, to receive the projection and allow the projection to move, and
wherein, when the pressing member rotates from the first rotary position to the second rotary position, the projection relatively moves within the recess and comes into contact with the inside surface thereof, resulting in prevention of further movement of the projection.

4. The clamp device according to Claim 1, wherein
the holding means comprises a resilient body for urging the pressing member toward the press releasing position from the pressing position.

5. The clamp device according to Claim 1, wherein
the interlock means comprises: a guide means for guiding the rotary member to move in the same direction as the axial direction by rotating the rotary member; and a support means for supporting the pressing member so that it moves between the press releasing position and the pressing position as the rotary member moves in the same direction as the axial direction.

6. The clamp device according to Claim 5, wherein
the guide means comprises: a guided projection disposed in either one of the body and the rotary member; and a guide surface provided in the other of the body and the rotary member, for relatively guiding the guided projection.

7. The clamp device according to Claim 5, wherein the support means comprises: a resilient element for urging the pressing member toward the press releasing position from the pressing position; and a receiving portion disposed in the rotary member for receiving the pressing member against the urging force of the resilient element.

8. The clamp device according to Claim 1, wherein
the contact means comprises a resilient member for urging so that the first sliding surface and the second sliding surface of the pressing member and the rotary member facing each other come into tight contact.

9. The clamp device according to Claim 8, wherein
the contact means comprises: in addition to the resilient member, an engagement recess provided in either one of the pressing member and the rotary member; and an engagement member that is provided in the other of the pressing member and the rotary member and has an engagement portion resiliently urged to releasably engage the engagement recess.

10. The clamp device according to Claim 1, wherein
the pressing member is guided, while being in the press releasing position, to move from a side distant from the pressing position to a side near the pressing position as the pressing member rotates from the first rotary position to the second rotary position.

## Amended claims

### Amended claims under Art. 19.1 PCT

**1.** Amended) A clamp device for clamping an object to be clamped to a fixing base, comprising:
a body detachably secured to the fixing base;
a pressing member for pressing to clamp the object;
a rotary member to be operated for rotation;
the body, the pressing member, and the rotary member being combined so as to rotate relative to each other about an axis; the pressing member being adapted to rotate between a first rotary position not facing the object in the same direction as the axial direction and a second rotary position facing the object in the same direction as the axial direction; and the rotary member being adapted to rotate between one rotary position on the side of the first rotary position and another rotary position past a middle rotary position on the side of the second rotary position;
the pressing member being adapted to move in the same direction as the axial direction between a press releasing position on a press releasing side and a pressing position on a pressing side so as to press the object and release the press in the second rotary position;
a contact means for causing the pressing member and the rotary member to contact with each other so that the pressing member rotates between the first rotary position and the second rotary position as the rotary member rotates;
a holding means for holding the pressing member in the press releasing position between the first rotary position and the second rotary position;
a rotary range restricting means for preventing the pressing member from rotating from the second rotary position to a side opposite the first rotary position; and
an interlock means for moving the pressing member positioned in the second rotary position, between the press releasing position and the pressing position, as interlocked with the rotation of the rotary member between the middle rotary position and the other rotary position;
the interlock means comprising: a guide means for guiding the rotary member to move in the same direction as the axial direction with the rotation of the rotary member,; and a support means for supporting the pressing member so that it moves between the press releasing position and the pressing position as the rotary member moves in the same direction as the axial direction;
the guide means comprising: a guided projection provided in either one of the body and the rotary member; and a first guide surface provided in the other of the body and the rotary member, for relatively guiding the guided projection;
wherein, when the rotary member is rotated from the one rotary position to the middle rotary position, the pressing member, while being held in the press releasing position by the holding means, is rotated by the contact means from the first rotary position to the second rotary position as the rotary member rotates, and when the rotary member is rotated from the middle rotary position to the other rotary position, the pressing member, while being remained in the second rotary position by the rotary range restricting means, is moved from the press releasing position to the pressing position by the interlock means to press the object, and
wherein, when the rotary member is rotated from the other rotary position to the one rotary position side, the pressing member is moved by the interlock means from the pressing position to the press releasing position side, and the pressing member is rotated by the contact means from the second rotary position to the first rotary position as the rotary member rotates,
wherein the other of the body and the rotary member is provided with a second guide surface for relatively guiding the guided projection when the rotary member rotates between the one rotary position and the middle rotary position;
wherein the first guide surface is gentler in gradient than the second guide surface; and
wherein the pressing member, while being in the press releasing position, is guided by: the guided projection and the second guide surface, the holding means, and the contact means, to move from a side distant from the pressing position to a side near the pressing position as the pressing member rotates from the first rotary position to the second rotary position.

**2.** The clamp device according to Claim 1, wherein
the body has an axial bore in the axial direction thereof;
the rotary member has a shank portion that is rotatably inserted in the axial bore so that the rotary member may rotate about the axis relative to the body; and
the pressing member has a through-hole for the shank portion to pass and is allowed to rotate about the axis relative to the rotary member.

**3.** The clamp device according to Claim 1, wherein
the rotary range restricting means comprises: a projection disposed in either one of the body and the pressing member; and a recess such as a hole or a cut out formed in the other of the body and the pressing member, to receive the projection and allow the projection to move, and
wherein, when the pressing member rotates from the first rotary position to the second rotary position, the projection relatively moves within the recess and comes into contact with the inside surface thereof, resulting in prevention of further movement of the projection.

**4.** The clamp device according to Claim 1, wherein
the holding means comprises a resilient body for urging the pressing member toward the press releasing position from the pressing position.

**5.** Cancelled)

**6.** Cancelled)

**7.** Amended) The clamp device according to Claim 1, wherein the support means comprises: a resilient element for urging the pressing member toward the press releasing position from the pressing position; and a receiving portion disposed in the rotary member for receiving the pressing member against the urging force of the resilient element.

**8.** The clamp device according to Claim 1, wherein
the contact means comprises a resilient member for urging so that the first sliding surface and the second sliding surface of the pressing member and the rotary member facing each other come into tight contact.

**9.** The clamp device according to Claim 8, wherein
the contact means comprises: in addition to the resilient member, an engagement recess provided in either one of the pressing member and the rotary member; and an engagement member that is provided in the other of the pressing member and the rotary member and has an engagement portion resiliently urged to releasably engage the engagement recess.

**10.** Cancelled)

**11.** added) A clamp device for clamping an object to be clamped to a fixing base, comprising:
a body detachably secured to the fixing base;
a pressing member for pressing to clamp the object;
a rotary member to be operated for rotation;
the body, the pressing member, and the rotary member being combined so as to rotate relative to each other about an axis; the pressing member being adapted to rotate between a first rotary position not facing the object in the same direction as the axial direction and a second rotary position facing the object in the same direction as the axial direction; and the rotary member being adapted to rotate between one rotary position on the side of the first rotary position and another rotary position past a middle rotary position on the side of the second rotary position;
the pressing member being adapted to move in the same direction as the axial direction between a press releasing position on a press releasing side and a pressing position on a pressing side so as to press the object and release the press in the second rotary position;
a contact means for causing the pressing member and the rotary member to contact with each other so that the pressing member rotates between the first rotary position and the second rotary position as the rotary member rotates;
a holding means for holding the pressing member in the press releasing position between the first rotary position and the second rotary position;
a rotary range restricting means for preventing the pressing member from rotating from the second rotary position to a side opposite the first rotary position; and
an interlock means for moving the pressing member positioned in the second rotary position, between the press releasing position and the pressing position, as interlocked with the rotation of the rotary member between the middle rotary position and the other rotary position;
the interlock means comprising: a guide means for guiding the rotary member to move in the same direction as the axial direction with the rotation of the rotary member,; and a support means for supporting the pressing member so that it moves between the press releasing position and the pressing position as the rotary member moves in the same direction as the axial direction;
the guide means comprising: a guided projection provided in either one of the body and the rotary member; and a first guide surface which is the inside peripheral surface of the first elongate slot and provided in the other of the body and the rotary member, for relatively guiding the guided projection;
wherein, when the rotary member is rotated from the one rotary position to the middle rotary position, the pressing member, while being held in the press releasing position by the holding means, is rotated by the contact means from the first rotary position to the second rotary position as the rotary member rotates, and when the rotary member is rotated from the middle rotary position to the other rotary position, the pressing member, while being remained in the second rotary position by the rotary range restricting means, is moved from the press releasing position to the pressing position by the interlock means to press the object, and
wherein, when the rotary member is rotated from the other rotary position to the one rotary position side, the pressing member is moved by the interlock means from the pressing position to the press releasing position side, and the pressing member is rotated by the contact means from the second rotary position to the first rotary position as the rotary member rotates, and
wherein the other of the body and the rotary member is provided with a second guide surface which is the inside peripheral surface of a second elongate slot continuous from the first elongate slot and relatively guides the guided projection when the rotary member rotates between the one rotary position and the middle rotary position; and
wherein the pressing member, while being in the press releasing position, is guided by: the guided projection and the second guide surface, the holding means, and the contact means, to move from a side distant from the pressing position to a side near the pressing position as the pressing member rotates from the first rotary position to the second rotary position.
